# EUROPÄISCHE PATENTSCHRIFT

(11) **EP 4 137 683 B1**
(45) Veröffentlichungstag und Bekanntmachung des Hinweises auf die Patenterteilung: **28.02.2024**
(21) Anmeldenummer: 22186597.5
(22) Anmeldetag: 24.07.2022
(51) Int. Cl.: F01N 3/021, F01N 3/10, F01N 3/20, F01N 3/28, F01N 13/08, F01N 13/14, F01N 13/18

(54) **ABGASANLAGE FÜR EINE BRENNKRAFTMASCHINE**
EXHAUST GAS DEVICE FOR A COMBUSTION ENGINE
INSTALLATION DE GAZ D'ÉCHAPPEMENT POUR UN MOTEUR À COMBUSTION INTERNE

(30) Priorität: 17.08.2021 DE 102021121289
(43) Veröffentlichungstag der Anmeldung: 22.02.2023
(73) Patentinhaber: Purem GmbH, 66539 Neunkirchen (DE)
(72) Erfinder: Datz, Wolfgang, Tübingen (DE); Kanzleiter, Ralph, Ebersbach (DE)
(74) Vertreter: Ruttensperger Lachnit Trossin Gomoll

(56) Entgegenhaltungen:
- EP-B1- 2 984 311
- EP-B1- 3 372 797
- DE-A1-102009 027 713
- JP-A- 2005 155 404
- US-A1- 2018 187 586
- US-B2- 8 082 732
- US-B2- 9 604 170

## Beschreibung

Die vorliegende Erfindung betrifft eine Abgasanlage für eine Brennkraftmaschine.

Bei in Fahrzeugen vorgesehenen Brennkraftmaschinen bzw. diesen zugeordneten Abgasanlagen ist eine hinsichtlich des Schadstoffausstoßes kritische Phase ein Kaltstart, in welchem die Brennkraftmaschine bzw. auch die verschiedenen Komponenten der Abgasanlage vergleichsweise niedrige Temperaturen aufweisen und daher beispielsweise in einer derartigen Abgasanlage enthaltene Abgasbehandlungseinheiten, wie zum Beispiel Oxidationskatalysatoren, Partikelfilter oder SCR-Katalysatoren, zur Abgasreinigung im Wesentlichen nicht aktiv sein können. Um diese Phase mit vergleichsweise hohem Schadstoffausstoß möglichst kurz zu halten, ist es erforderlich, die verschiedenen Systembereiche einer Abgasanlage möglichst schnell auf eine derart hohe Temperatur zu bringen, bei welcher eine ausreichende Minderung des Schadstoffanteils in dem von einer Brennkraftmaschine ausgestoßenen Abgas gewährleistet werden kann.

Eine Abgasanlage gemäß dem Oberbegriff des Anspruchs 1 ist aus der JP 2005 155404 A bekannt. Bei dieser Abgasanlage ist an einem einer Eintrittsöffnung in einem ersten Gehäuseelement eines Verbindungsgehäuses zugewandten Innenseite eines zweiten Gehäuseelements des Verbindunggehäuses ein das zweite Gehäuseelement bereichsweise abschirmendes, plattenartiges erstes Ablenkelement im Bereich seines Außenumfangsrandes festgelegt. An einem einer Austrittsöffnung in dem ersten Gehäuseelement zugewandten Innenseite des zweiten Gehäuseelements ist ein das zweite Gehäuseelement bereichsweise abschirmendes, plattenartiges zweites Ablenkelement im Bereich seines Außenumfangsrandes festgelegt.

Die DE 10 2009 027 713 A1 offenbart eine Abgasanlage, bei welcher ein Dosiermodul zum Einspritzen eines Abgasnachbehandlungsmittels vermittels eines ersten Schutzblechs an einem Abgasrohr getragen ist. An dem ersten Schutzblech ist an dessen in einer Öffnung des Abgasrohrs liegenden Bereich ein zweites Schutzblech mit mehreren dem ersten Schutzblech zugewandten Ausformungen festgelegt.

Es ist die Aufgabe der vorliegenden Erfindung, eine Abgasanlage für eine Brennkraftmaschine bereitzustellen, bei welcher mit baulich einfachen Maßnahmen eine die Wärmeabgabe nach außen mindernde thermische Abschirmung erreicht werden kann.

Erfindungsgemäß wird diese Aufgabe gelöst durch eine Abgasanlage für eine Brennkraftmaschine gemäß Anspruch 1. Diese Abgasanlage umfasst wenigstens eine mit einer Außenwand ein Abgasströmungsvolumen begrenzende und an einer dem Abgasströmungsvolumen zugewandten Innenseite der Außenwand wenigstens ein Abschirmelement tragende Komponente, wobei zwischen der Außenwand und dem Abschirmelement ein Zwischenraum gebildet ist, und wobei an dem wenigstens einen Abschirmelement wenigstens eine auf die Außenwand zu gerichtete, mit der Außenwand fest verbundene erste Verbindungsausformung vorgesehen ist oder/und an der Außenwand wenigstens eine auf das wenigstens eine Abschirmelement zu gerichtete, mit dem wenigstens einen Abschirmelement fest verbundene zweite Verbindungausformung vorgesehen ist.

Durch das Vorsehen eines oder mehrerer Abschirmelemente an einer oder mehreren Komponenten einer Abgasanlage wird die an ihrer Innenseite überdeckte und an ihrer Außenseite im Allgemeinen in Wärmeübertragungskontakt mit der Umgebung stehende Außenwand zumindest bereichsweise gegen die direkte Anströmung mit Abgas abgeschirmt. Da ein derartiges Abschirmelement einen Abstand zur Außenwand aufweist und lediglich im Bereich der Verbindungsausformungen in Kontakt mit dieser ist, wird im Abgas transportierte Wärme nur in sehr begrenztem Ausmaß auf die Außenwand übertragen und über diese nach außen abgegeben. Dadurch werden thermische Verluste deutlich begrenzt, was einerseits eine schnellere Erwärmung der Abgasanlage in einer Kaltstartphase zur Folge hat, andererseits die thermische Belastung von in der Umgebung einer derartigen Abgasanlage vorgesehenen Systembereichen eines Fahrzeugs mindert, so dass auch die Möglichkeit besteht, derartige Systembereiche näher an der Abgasanlage zu positionieren.

Um bei ausreichender Stabilität eine gute Abschirmcharakteristik bereitstellen zu können, wird vorgeschlagen, dass das wenigstens eine Abschirmelement ein Blechumformteil ist, oder/und dass das wenigstens eine Abschirmelement eine Dicke im Bereich von 0,6 mm bis 1,0 mm, vorzugsweise etwa 0,8 mm, aufweist.

Auch die Außenwand kann wenigstens ein Blechumformteil umfassen. Ferner kann zum Erreichen einer guten Abschirmwirkung der Zwischenraum eine Abmessung im Bereich von 0,5 mm bis 6 mm aufweisen.

Um einerseits einen thermischen Kontakt zu vermeiden, andererseits durch gegenseitiges Anschlagen entstehende Klappergeräusche zu vermeiden, umfasst wenigstens ein, vorzugsweise jedes Abschirmelement einen in Abstand zu der Außenwand positionierten Außenrandbereich. Dies bedeutet, dass ein derartiges Abschirmelement im Wesentlichen nur im Bereich der Verbindungsausformungen einen körperlichen Kontakt mit der damit verbundenen Komponente bzw. deren Außenwand aufweist.

Um auch bei komplexen Geometrien der Außenwand eines Gehäuses diese im Wesentlichen vollständig gegen die direkte Anströmung mit Abgas abschirmen zu können, können mehrere Abschirmelemente an einer derartigen Komponente bzw. deren Außenwand vorgesehen sein. Um dabei dort, wo derartige Abschirmelemente aneinander anschließen, ein direktes Anströmen der Außenwand der Komponente zu vermeiden, können wenigstens zwei Abschirmelemente in einem Angrenzungsbereich einander bereichsweise überlappend angeordnet sein.

Um auch in einem derartigen Überlappungsbereich ein gegenseitiges Anstoßen und damit einhergehende Klappergeräusche zu vermeiden, wird vorgeschlagen, dass zwischen den in dem Angrenzungsbereich einander überlappend angeordneten Abschirmelementen ein Zwischenraum gebildet ist.

Für eine thermisch belastbare und chemisch resistente Verbindung kann das wenigstens eine Abschirmelement bei wenigstens einer, vorzugsweise jeder Verbindungsausformung durch Materialschluss, vorzugsweise Verschweißen, wie zum Beispiel Widerstandsschweißen, Laserschweißen oder Lochschweißen, mit der Außenwand verbunden sein.

Für eine kompakte Ausgestaltung umfasst die Abgasanlage wenigstens eine erste Abgasbehandlungseinheit mit einem stromaufwärtigen Eintrittsbereich und einem stromabwärtigen Austrittsbereich und wenigstens eine zweite Abgasbehandlungseinheit mit einem stromaufwärtigen Eintrittsbereich und einem stromabwärtigen Austrittsbereich sowie ein mit dem stromabwärtigen Austrittsbereich der wenigstens einen ersten Abgasbehandlungseinheit und dem stromaufwärtigen Eintrittsbereich der wenigstens einen zweiten Abgasbehandlungseinheit verbundenes Verbindungsgehäuse. Dabei stellt das Verbindungsgehäuse eine ein Abschirmelement tragende Komponente bereit.

Zum Erhalt einer konstruktiv einfach zu realisierenden Ausgestaltung umfasst das Verbindungsgehäuse ein erstes Gehäuseelement mit einer Eintrittsöffnung und einer Austrittsöffnung umfassen, wobei im Bereich der Eintrittsöffnung der stromabwärtige Austrittsbereich der wenigstens einen ersten Abgasbehandlungseinheit mit dem Verbindungsgehäuse verbunden ist und im Bereich der Austrittsöffnung der stromaufwärtige Eintrittsbereich der wenigstens einen zweiten Abgasbehandlungseinheit mit dem Verbindungsgehäuse verbunden ist. Das Verbindungsgehäuse umfasst ferner ein mit dem ersten Gehäuseelement ein von Abgas durchströmbares Verbindungsvolumen umgrenzendes zweites Gehäuseelement. Da das Verbindungsgehäuse eine an ihrer Innenseite durch wenigstens ein Abschirmelement abgeschirmte Komponente bereitstellt, umfasst die Außenwand dieser Komponente das erste Gehäuseelement oder/und das zweite Gehäuseelement.

Da im Bereich des Verbindungsgehäuses eine Strömungsumlenkung des Abgasstroms erfolgen kann und dabei insbesondere der Eintrittsöffnung bzw. der Austrittsöffnung bzw. einem Übergangsbereich zwischen diesen gegenüberliegende Bereiche des zweiten Gehäuseelements in Wechselwirkung mit dem Abgasstrom treten können, ist zum Erreichen einer guten Abschirmwirkung an einer dem Verbindungsvolumen zugewandten Innenseite des zweiten Gehäuseelements in einem der Eintrittsöffnung gegenüberliegenden Bereich oder/und in einem der Austrittsöffnung gegenüberliegenden Bereich oder/und in einem einem zwischen der Eintrittsöffnung und der Austrittsöffnung gebildeten Übergangsbereich gegenüberliegenden Bereich wenigstens ein Abschirmelement vorgesehen.

Zur Anpassung an komplexe Geometrien des Verbindunggehäuses können an dem zweiten Gehäuseelement wenigstens zwei einander in dem dem Übergangsbereich des ersten Gehäuseelements gegenüberliegenden Bereich überlappende Abschirmelemente vorgesehen sein.

Alternativ oder zusätzlich zum Vorsehen wenigstens eines Abschirmelements am zweiten Gehäuseelement ist an dem ersten Gehäuseelement im Bereich des Übergangsbereichs wenigstens ein Abschirmelement vorgesehen.

Zur Anbindung an weitere beispielsweise rohrartige Elemente einer Abgasanlage kann der stromaufwärtige Eintrittsbereich der ersten Abgasbehandlungseinheit mit einem Eintrittsgehäuse verbunden sein. Dieses Eintrittsgehäuse kann eine Komponente bereitstellen.

Die erste Abgasbehandlungseinheit kann einen Oxidationskatalysator oder/und einen Partikelfilter oder/und einen SCR-Katalysator umfassen. Die zweite Abgasbehandlungseinheit kann einen SCR-Katalysator umfassen.

Insbesondere dann, wenn die zweite Abgasbehandlungseinheit einen SCR-Katalysator umfasst, kann für die Durchmischung von Abgas mit einem Reaktionsmittel stromaufwärts des SCR-Katalysators an dem Verbindungsgehäuse eine Reaktionsmittelabgabeanordnung zum Abgeben von Reaktionsmittel in das Verbindungsgehäuse durchströmendes Abgas vorgesehen sein.

Die vorliegende Erfindung wird nachfolgend mit Bezug auf die beiliegenden Figuren detailliert beschrieben. Es zeigt:
- Fig. 1: eine prinzipartige Längsschnittdarstellung einer Abgasanlage für eine Brennkraftmaschine;
- Fig. 2: eine Detailansicht eines Verbindungsgehäuses der Abgasanlage der Fig. 1 mit einem an dem Verbindungsgehäuse getragenes Abschirmelement;
- Fig. 3: eine der Fig. 2 entsprechende Darstellung mit zwei an dem Verbindungsgehäuse getragenen Abschirmelementen;
- Fig. 4: eine Draufsicht auf die beiden Abschirmelemente der Fig. 3;
- Fig. 5: eine Detailansicht des Verbindungsgehäuses in einem Übergangsbereich eines eine Eintrittsöffnung und eine Austrittsöffnung bereitstellenden ersten Gehäuseelements des Verbindungsgehäuses mit einem in diesem Übergangsbereich vorgesehenen Abschirmelement;
- Fig. 6: eine Schnittdarstellung eines Eintrittsgehäuses der Abgasanlage der Fig. 1 mit einem daran getragenen Abschirmelement.

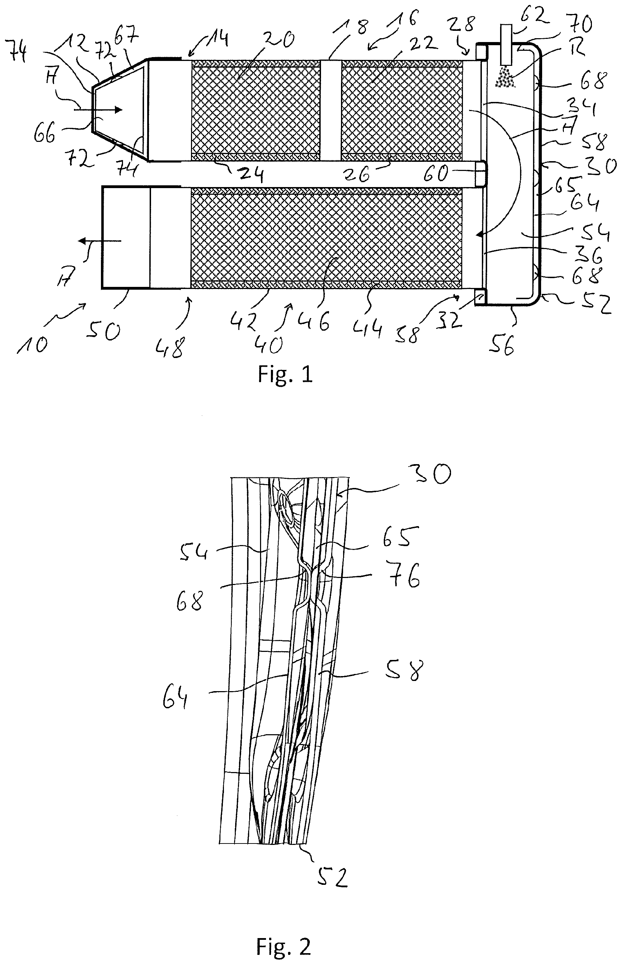

In Fig. 1 ist eine Abgasanlage bzw. ein Teil einer Abgasanlage für eine Brennkraftmaschine eines Fahrzeugs allgemein mit 10 bezeichnet. Diese Abgasanlage 10 umfasst in einem stromaufwärtigen Bereich derselben ein in der Strömungsrichtung von in die Abgasanlage 10 eingeleitetem bzw. darin strömendem Abgas A sich erweiterndes Eintrittsgehäuse 12. Mit dem Eintrittsgehäuse 12 ist ein stromaufwärtiger Eintrittsbereich 14 einer allgemein mit 16 bezeichneten ersten Abgasbehandlungseinheit verbunden. Die erste Abgasbehandlungseinheit 16 kann in einem rohrartigen Gehäuse 18 einen Oxidationskatalysator 20 oder/und einen Partikelfilter 22 umfassen, welche in Strömungsrichtung aufeinander folgend im rohrartigen Gehäuse 18 angeordnet und darin beispielsweise durch eine Fasermatte 24, 26 oder dergleichen getragen sein können. Die erste Abgasbehandlungseinheit 16 kann ferner beispielsweise einen SCR-Katalysator umfassen, der beispielsweise in Kombination mit einem Diesel-Oxidationskatalysator oder in Kombination mit einem Diesel-Partikelfilter in dem Gehäuse 18 angeordnet sein kann.

Ein stromabwärtiger Austrittsbereich 28 der ersten Abgasbehandlungseinheit 16 ist mit einem allgemein mit 30 bezeichneten Verbindungsgehäuse verbunden. Das Verbindungsgehäuse 30 umfasst ein beispielsweise einstückig als Blechumformteil ausgebildetes erstes Gehäuseelement 32 mit einer Eintrittsöffnung 34, in deren Bereich das rohrartige Gehäuse 18 der ersten Abgasbehandlungseinheit 16 mit dem Verbindungsgehäuse 30 gasdicht verbunden ist. Das erste Gehäuseelement 32 umfasst ferner eine Austrittsöffnung 36, in deren Bereich ein stromaufwärtiger Eintrittsbereich 38 einer zweiten Abgasbehandlungseinheit 40 mit dem Verbindungsgehäuse 30 gasdicht verbunden ist.

Die zweite Abgasbehandlungseinheit 40 umfasst ein beispielsweise rohrartiges Gehäuse 42, in welchem beispielsweise vermittels einer Fasermatte 44 ein SCR-Katalysator 46 getragen ist. Ein stromabwärtiger Austrittsbereich 48 der zweiten Abgasbehandlungseinheit 40 ist beispielsweise an ein Austrittsgehäuse 50 oder an ein beispielsweise rohrartiges und beispielsweise zu einem Schalldämpfer führendes Element der Abgasanlage 10 angebunden.

Das Verbindungsgehäuse 30 umfasst ferner ein beispielsweise einstückig als Blechumformteil bereitgestelltes zweites Gehäuseelement 52. Während das erste Gehäuseelement 32 beispielsweise im Wesentlichen plattenartig ausgebildet sein kann und im Bereich der Eintrittsöffnung 34 bzw. der Austrittsöffnung 36 zur Verbindung mit den Abgasbehandlungseinheiten 16, 40 vorgesehene randartige Ausformungen aufweisen kann, kann das zweite Gehäuseelement 52 topfartig ausgebildet sein, um zusammen mit dem ersten Gehäuseelement 32 ein von Abgas A durchströmbares Verbindungsvolumen 54 zu umgrenzen. Dabei kann eine Umfangswand 56 des zweiten Gehäuseelements 52 einen im Außenumfangsbereich des ersten Gehäuseelements 32 gebildeten Randbereich übergreifen und mit diesem beispielsweise durch Verschweißen fest und gasdicht verbunden sein. Eine Bodenwand 58 des zweiten Gehäuseelements 52 liegt dem ersten Gehäuseelement 32, insbesondere der Eintrittsöffnung 34, der Austrittsöffnung 36 und einem dazwischen gebildeten Übergangsbereich 60 des ersten Gehäuseelements 32, gegenüber.

Am Verbindungsgehäuse 30 bzw. dessen zweiten Gehäuseelements 52 ist eine allgemein als Injektor bezeichnete Reaktionsmittelabgabeanordnung 62 getragen. Diese gibt ein Reaktionsmittel R, beispielsweise ein Gemisch aus Harnstoff und Wasser, in das Verbindungsvolumen 54 ab, so dass im Verbindungsvolumen 54 strömendes Abgas A mit dem Reaktionsmittel R vermischt werden kann und ein Gemisch aus Abgas A und Reaktionsmittel R bzw. Reaktionsmitteldampf im stromaufwärtigen Eintrittsbereich 38 in die zweite Abgasbehandlungseinheit 40 einströmen kann.

Es ist darauf hinzuweisen, dass der vorangehend mit Bezug auf die Fig. 1 beschriebene Aufbau einer Abgasanlage in verschiedenster Weise variiert werden kann. Beispielsweise ist es möglich, die beiden Abgasbehandlungseinheiten bzw. die rohrartigen Gehäuse 18, 42 derselben nicht im Wesentlichen parallel und nebeneinanderliegend bzw. einander in deren Längsrichtung überlappend anzuordnen, so dass das Verbindungsgehäuse 30 im Wesentlichen auch ein Umlenkgehäuse bereitstellt, in welchem der Abgasstrom beim Übergang zwischen den beiden Abgasbehandlungseinheiten 16, 40 um etwa 180° umgelenkt wird, sondern die beiden Abgasbehandlungseinheiten am Verbindungsgehäuse im Wesentlichen in ihrer Längsrichtung aneinander anschließend vorzusehen. Ferner können beispielsweise zwei erste Abgasbehandlungseinheiten 16 oder/und zwei zweite Abgasbehandlungseinheiten 40 zueinander im Wesentlichen parallel angeordnet und mit dem Verbindunggehäuse 30 verbunden sein. Auch können in den beiden Abgasbehandlungseinheiten 16, 40 andere der Abgasbehandlung dienende Komponenten als die vorangehend mit Bezug auf Fig. 1 beschriebenen Komponenten positioniert werden.

Bei der in Fig. 1 dargestellten Abgasanlage 10 sind am Verbindungsgehäuse 30 und am Eintrittsgehäuse 12 als Blechumformteile bereitgestellte Abschirmelemente 64, 66 vorgesehen. Das am Verbindungsgehäuse 30 vorgesehene Abschirmelement 64 ist in seiner Formgebung im Wesentlichen an die Kontur des zweiten Gehäuseelements 52 angepasst, so dass es beispielsweise einen wesentlichen Bereich der Bodenwand 58 überdeckt. Auch zumindest ein Teil der Umfangswand 56 kann von dem Abschirmelement 64 überdeckt sein. Das mit Blechmaterial mit einer Dicke beispielsweise im Bereich von 0,8 mm aufgebaute Abschirmelement 64 weist zum zweiten Gehäuseelement 52 einen Abstand auf, der im Bereich von 0,5 mm bis 6 mm liegen kann und über das Abschirmelement 64 hinweg variieren kann, so dass zwischen dem Abschirmelement 64 und dem zweiten Gehäuseelement 52 ein Zwischenraum 65 gebildet ist.

An mehreren Positionen sind am Abschirmelement 64 durch Umformen eines Blechrohlings gebildete Verbindungsausformungen 68 vorgesehen, in deren Bereich das Abschirmelement 64 an der Innenseite der Bodenwand 58 des zweiten Gehäuseelements 52 anliegt und damit durch Materialschluss, insbesondere Verschweißen, wie z. B. Widerstandsschweißen, Laserschweißen oder Lochschweißen, fest verbunden ist. In den Bereichen zwischen den bzw. außerhalb der Verbindungsausformungen 68, insbesondere auch in seinem gesamten Außenrandbereich 70, ist das Abschirmelement 64 in Abstand zum zweiten Gehäuseelement 52 angeordnet, so dass im Betrieb auftretende Vibrationen nicht zu einem gegenseitigen Anschlagen des Abschirmelements 64 mit dem zweiten Gehäuseelement 52 führen kann.

Man erkennt in Fig. 1, dass das Abschirmelement 64 am zweiten Gehäuseelement 52 in Bereichen vorgesehen ist, welche der Eintrittsöffnung 34, der Austrittsöffnung 36 und auch dem Übergangsbereich 60 gegenüberliegen. Somit ist das zweite Gehäuseelement 52 des Verbindungsgehäuses 30 effizient gegen eine direkte Anströmung durch das in dem Verbindungsvolumen 54 strömende Abgas A abgeschirmt. Ein direkter Wärmeübertragungskontakt zwischen dem Abgas A und dem Verbindungsgehäuse 30 ist in dem durch das Abschirmelement 64 abgeschirmten Bereich des Verbindungsgehäuses 30 somit im Wesentlichen ausgeschlossen. Ein direkter Wärmeübertrag zwischen dem Abschirmelement 64 und dem Verbindungsgehäuse 30 ist auf die wenigen Bereiche beschränkt, in welchen das Abschirmelement 64 im Bereich seiner Verbindungsauformungen 68 in Kontakt mit dem zweiten Gehäuseelement 52 ist. Die Abgabe von Wärme aus der Abgasanlage 10 von dem eine vergleichsweise große nach außen frei liegende Oberfläche bereitstellende Verbindungsgehäuse 30 wird somit erheblich reduziert, wodurch gewährleistet ist, dass das die Abgasanlage 10 durchströmende Abgas A auf einem vergleichsweise hohen Temperaturniveau gehalten werden kann, und somit dafür gesorgt ist, dass ein großer Teil der im Abgas A transportierten Wärme auf die Abgasbehandlungseinheiten 16, 40 übertragen werden kann.

Auch das am Eintrittsgehäuse 12 vorgesehene Abschirmelement 66 weist mehrere Verbindungsausformungen 72 auf, in deren Bereich dieses an der Innenseite des Eintrittsgehäuses 12 anliegt und damit durch Materialschluss, beispielsweise Verschweißen, verbunden ist. Das Abschirmelement 66 kann in seiner Formgebung an die Formgebung des Eintrittsgehäuses 12 angepasst sein und beispielsweise ebenfalls eine in der Abgasströmungsrichtung sich erweiternde Kontur aufweisen. Auch zwischen dem Abschirmelement 66 und dem Eintrittsgehäuse 12 bzw. der das Abschirmelement 66 tragenden Wandung des Eintrittsgehäuses 12 ist ein Zwischenraum 67gebildet, der eine Abmessung im Bereich von 0,5 mm bis 6 mm aufweisen kann. Gleichermaßen ist das Abschirmelement 66 im Wesentlichen nur im Bereich der Verbindungsausformungen 72 in Kontakt mit dem Eintrittsgehäuse 12. Im Bereich seines Außenrandbereichs 74 weist das Abschirmelement 66 keine Verbindung bzw. keinen Kontakt mit dem Eintrittsgehäuse 12 auf. Alternativ könnte in demjenigen Außenrandbereich 74, mit welchem das Abschirmelement 66 einer Eintrittsöffnung des Eintrittsgehäuses 12 benachbart positioniert ist, das Abschirmelement 66 durch Verschweißen fest mit dem Abschirmgehäuse 12 verbunden sein.

Bei dem vorangehend mit Bezug auf die Fig. 1 beschriebenen Aufbau einer Abgasanlage 10 stellen das Verbindungsgehäuse 30 und das Eintrittsgehäuse 12 jeweils eine Komponente der Abgasanlage 10 bereit, welche an einer dem Abgasstrom zugewandten Innenseite derselben ein bzw. wenigstens ein Abschirmelement trägt und somit durch dieses im Bereich dieser von dem Abschirmelement überdeckten Außenwand gegen direkte Anströmung mit Abgas abgeschirmt ist. Es ist darauf hinzuweisen, dass auch in anderen Bereichen einer Abgasanlage durch Abschirmelemente, welche grundsätzlich die vorangehend mit Bezug auf die Fig. 1 beschriebene Gestalt aufweisen können, eine derartige Abschirmwirkung erzielt werden kann.

Wie im Folgenden beschrieben, können derartige Abschirmelemente auch anders gestaltet bzw. in anderer Weise an die diese tragenden und somit durch diese abgeschirmten Komponenten angebunden sein.

Die Fig. 2 zeigt in einer alternativen Ausgestaltung einen Bereich der Bodenwand 58 des zweiten Gehäuseelements 52 des Abschirmgehäuses 30. Im Bereich dieser Bodenwand 58 ist das zweite Gehäuseelement 52 in dem in Fig. 2 dargestellten Ausgestaltungsbeispiel durch das Abschirmelement 64 derart überdeckt, dass zwischen der Bodenwand 58 und dem Abschirmelement 64 der vorangehend bereits angesprochene Zwischenraum 65 gebildet ist. Am Abschirmelement 64 sind mehrere Verbindungsausformungen 68 vorgesehen. In denjenigen Bereichen des zweiten Gehäuseelements 52, in welchen das Abschirmelement 64 mit seinen Verbindungsausformungen 68 am zweiten Gehäuseelement 52 festzulegen ist, weist das zweite Gehäuseelement 52 ebenfalls Verbindungsausformungen 76 auf. Die Verbindungsausformungen 68 des Abschirmelements 64 stellen somit erste Verbindungsausformungen bereit, während die Verbindungsausformungen 76 des zweiten Gehäuseelements 52 des Verbindungsgehäuses 30 zweite Verbindungsausformungen bereitstellen. Vorzugsweise ist jeder ersten Verbindungsausformung 68 des Abschirmelements 64 eine zweite Verbindungsausformung 76 des zweiten Gehäuseelements 52 zugeordnet, so dass das Abschirmelement 64 und das zweite Gehäuseelement 52 jeweils in einem einander zugeordneten Paar mit einer ersten Verbindungsausformung 68 und einer zweiten Verbindungsausformung 76 aneinander anliegen und miteinander durch Materialschluss verbunden sind. Somit ist die Möglichkeit geschaffen, durch vergleichsweise klein dimensionierte Verbindungsausformungen 68, 76 einen vergleichsweise großen Abstand zwischen dem Abschirmelement 64 und dem zweiten Gehäuseelement 52 in den zwischen den bzw. um die jeweiligen Paare von Verbindungsausformungen 78, 76 liegenden Bereichen bereitzustellen.

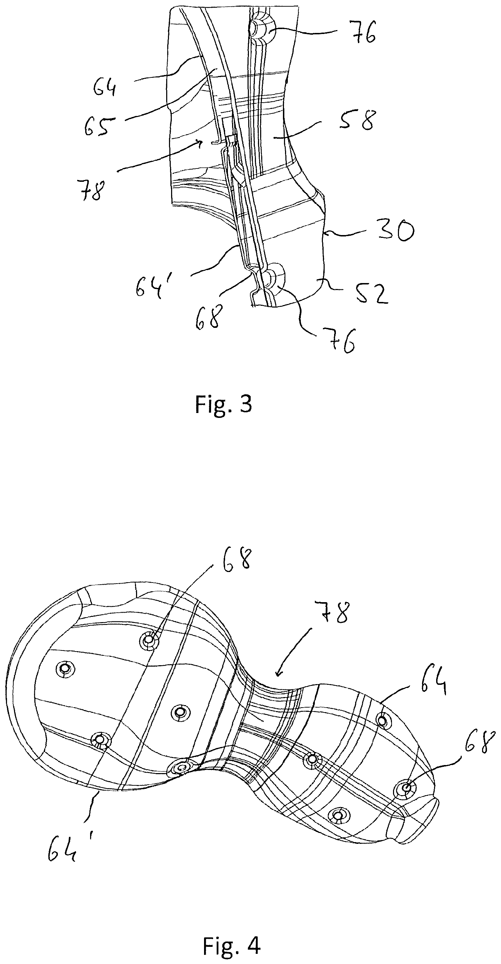

Die Fig. 3 und 4 zeigen eine Ausgestaltung, bei welcher am zweiten Gehäuseelement 52 des Verbindungsgehäuses 30 zwei Abschirmelemente 64, 64' getragen sind. Jedes der Abschirmelemente 64, 64' weist eine Mehrzahl erster Verbindungsausformungen 68 auf, in deren Bereich die jeweiligen Abschirmelemente 64, 64' beispielsweise wiederum an jeweiligen zweiten Verbindungsausformungen 76 des zweiten Gehäuseelements 52 durch Materialschluss festgelegt sind.

Die beiden Abschirmelemente 64, 64' grenzen in einem Angrenzungsbereich 78 aneinander an und überlappen einander im Angrenzungsbereich 78 derart, dass auch in den einander überlappenden Abschnitten der Abschirmelemente 64, 64' ein Abstand zwischen diesen besteht. Somit ist auch im Angrenzungsbereich 78 gewährleistet, dass die Abschirmelemente 64, 64` nicht gegeneinander schlagen können und somit Klappergeräusche nicht auftreten können.

Bei der in den Fig. 3 und 4 dargestellten Ausgestaltung kann beispielsweise vorgesehen sein, dass das Abschirmelement 64 im Wesentlichen an demjenigen Bereich des zweiten Gehäuseelements 52 am Verbindungsgehäuse 30 getragen ist, welcher der Eintrittsöffnung 34 gegenüberliegt, während das Verbindungselement 64' im Wesentlichen an demjenigen Bereich des zweiten Gehäuseelements 52 am Verbindungsgehäuse 30 getragen ist, welcher der Austrittsöffnung 36 gegenüberliegt. Der Angrenzungsbereich 78 der beiden Abschirmelemente 64, 64` kann im Wesentlichen in demjenigen Bereich des zweiten Gehäuseelements 52 positioniert sein, welcher dem Übergangsbereich 60 des ersten Gehäuseelements 32 gegenüberliegend positioniert ist.

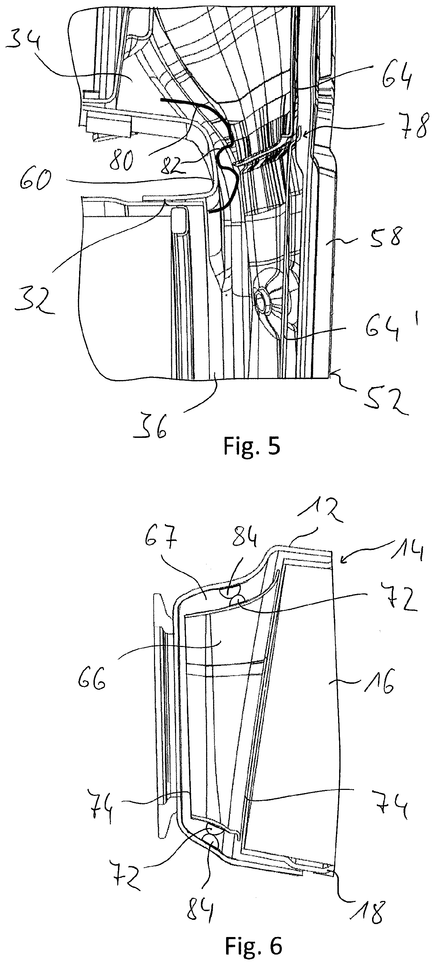

Die Fig. 5 zeigt eine Ausgestaltung, bei welcher alternativ oder zusätzlich zum Vorsehen eines oder mehrerer Verbindungselemente 64, 64' am zweiten Gehäuseelement 52 des Verbindungsgehäuses 30 auch am ersten Gehäuseelement 32, insbesondere am Übergangsbereich 60 zwischen der Eintrittsöffnung 34 und der Austrittsöffnung 36, ein diesen Übergangsbereich 60 abschirmendes Abschirmelement 80 vorgesehen und im Bereich einer oder mehrerer Verbindungsausformungen 82 durch Materialschluss, beispielsweise Verschweißen, daran festgelegt ist. Somit kann bei dieser Ausgestaltung im Wesentlichen die gesamte vom Abgas anströmbare Innenoberfläche des Verbindungsgehäuses 30 gegen direkte Anströmung mit Abgas abgeschirmt werden.

Die Fig. 6 zeigt eine Abwandlung der in Fig. 1 dargestellten Ausgestaltung des dem Eintrittsgehäuse 12 zugeordneten Abschirmelements 66 bzw. des Eintrittsgehäuses 12. Bei dieser Abwandlung sind in Zuordnung zu den Verbindungsausformungen 72 am Abschirmelement 66 auch am Eintrittsgehäuse 12 Verbindungsausformungen 84 vorgesehen. Vorzugsweise ist in Zuordnung zu jeder ersten Verbindungsausformung 72 des Abschirmelements 66 eine zweite Verbindungsausformung 84 des Eintrittsgehäuses 12 vorgesehen, so dass eine feste Verbindung zwischen dem Abschirmelement 66 und dem Eintrittsgehäuse 12 im Bereich von jedem Paar aus einer am Abschirmelement 66 vorgesehenen ersten Verbindungsausformung 72 und einer am Eintrittsgehäuse 12 vorgesehenen zweien Verbindungsausformung 84 erreicht werden kann. Auch damit kann mit vergleichsweise klein dimensionierten Verbindungsausformungen 72, 84 ein vergleichsweise groß dimensionierter Zwischenraum 67 zwischen dem Abschirmelement 66 und der diesem gegenüberliegenden Wand des Eintrittsgehäuses 12 erreicht werden.

Die vorliegende Erfindung sieht einen Aufbau einer Abgasanlage vor, bei welcher mit baulich einfachen Maßnahmen eine effiziente Abschirmung von einer oder mehreren Außenwänden von Komponenten der Abgasanlage erreicht werden kann. Da eine direkte Anströmung durch Abgas insbesondere in diesbezüglich kritischen Bereichen weitestgehend ausgeschlossen werden kann, werden Wärmeverluste nach außen gemindert und somit die Effizienz einer Abgasanlage zur Abgasreinigung erhöht. Ferner wird die Gefahr, dass Wärme auf andere Systembereiche eines Fahrzeugs übertragen wird, gemindert, wodurch es möglich wird, derartige Systembereiche näher an der Abgasanlage zu positionieren.

Da die erfindungsgemäß einzusetzenden Abschirmelemente nur in diskreten Bereichen mit den diese tragenden Komponenten bzw. deren Außenwänden verbunden sind, wird eine unter Berücksichtigung der thermischen Ausdehnungen auftretende übermäßige Belastung sowohl im Bereich der Abschirmelemente, als auch im Bereich der diese tragenden Komponenten, als auch im Bereich der jeweiligen materialschlüssigen Verbindungen vermieden. Es wird eine auch gegen die chemische Belastung durch das Abgas resistente thermomechanisch dauerhaltbare Ausgestaltung erreicht. Insbesondere das Vorsehen mehrerer aneinander angrenzender und einander überlappender Abschirmelemente ermöglicht eine effiziente Abschirmung auch bei komplexeren Geometrien der derartige Abschirmelemente tragenden Komponenten, wobei durch das Vorsehen mehrerer voneinander getrennter und einander vorzugsweise nicht berührender Abschirmelemente auch die durch thermische Ausdehnungen entstehende Belastung der Bereiche, in welchen ein jeweiliges Abschirmelement mit einer dieses tragenden Komponente verbunden ist, gemindert werden kann.

Es ist abschließend darauf hinzuweisen, dass im Sinne der vorliegenden Erfindung eine Außenwand, insbesondere eine durch ein Abschirmelement gegen direkte Anströmung durch Abgas abgeschirmte Außenwand, eine derartige Wand ist, welche ein Volumen, in welchem Abgas strömt, umgrenzt und somit in direkten Kontakt mit dem Abgas treten kann bzw. könnte. Eine derartige Außenwand kann an der von dem von Abgas durchströmten Volumen abgewandten Außenseite zur Umgebung frei liegen, kann jedoch auch von anderen Komponenten beispielsweise der Abgasanlage überdeckt sein und mit diesen in direktem Kontakt stehen.

## Patentansprüche

1. Abgasanlage für eine Brennkraftmaschine, umfassend wenigstens eine mit einer Außenwand ein Abgasströmungsvolumen begrenzende und an einer dem Abgasströmungsvolumen zugewandten Innenseite der Außenwand wenigstens ein Abschirmelement (64, 64', 66, 80) tragende Komponente, wobei zwischen der Außenwand und dem Abschirmelement (64, 64', 66, 80) ein Zwischenraum (65, 67) gebildet ist, ferner umfassend wenigstens eine erste Abgasbehandlungseinheit (16) mit einem stromaufwärtigen Eintrittsbereich (14) und einem stromabwärtigen Austrittsbereich (28) und wenigstens eine zweite Abgasbehandlungseinheit (40) mit einem stromaufwärtigen Eintrittsbereich (38) und einem stromabwärtigen Austrittsbereich (48) sowie ein mit dem stromabwärtigen Austrittsbereich (28) der wenigstens einen ersten Abgasbehandlungseinheit (16) und dem stromaufwärtigen Eintrittsbereich (38) der wenigstens einen zweiten Abgasbehandlungseinheit (40) verbundenes Verbindungsgehäuse (30), wobei das Verbindungsgehäuse (30) eine ein Abschirmelement (64, 64', 80) tragende Komponente bereitstellt, wobei das Verbindungsgehäuse (30) ein erstes Gehäuseelement (32) mit einer Eintrittsöffnung (34) und einer Austrittsöffnung (36) umfasst, wobei im Bereich der Eintrittsöffnung (34) der stromabwärtige Austrittsbereich (28) der wenigstens einen ersten Abgasbehandlungseinheit (16) mit dem Verbindungsgehäuse (30) verbunden ist und im Bereich der Austrittsöffnung (36) der stromaufwärtige Eintrittsbereich (38) der wenigstens einen zweiten Abgasbehandlungseinheit (40) mit dem Verbindungsgehäuse (30) verbunden ist, wobei das Verbindungsgehäuse (30) ein mit dem ersten Gehäuseelement (32) ein von Abgas durchströmbares Verbindungsvolumen (54) umgrenzendes zweites Gehäuseelement (52) umfasst, wobei die Außenwand das erste Gehäuseelement (32) oder/und das zweite Gehäuseelement (52) umfasst, wobei:
- an einer dem Verbindungsvolumen (54) zugewandten Innenseite des zweiten Gehäuseelements (52) in einem der Eintrittsöffnung (34) gegenüberliegenden Bereich wenigstens ein Abschirmelement (64) vorgesehen ist, oder/und
- an der dem Verbindungsvolumen (54) zugewandten Innenseite des zweiten Gehäuseelements (52) in einem der Austrittsöffnung (36) gegenüberliegenden Bereich wenigstens ein Abschirmelement (64') vorgesehen ist, oder/und
- an der dem Verbindungsvolumen (54) zugewandten Innenseite des zweiten Gehäuseelements (52) in einem einem zwischen der Eintrittsöffnung (34) und der Austrittsöffnung (36) gebildeten Übergangsbereich (60) gegenüberliegenden Bereich wenigstens ein Abschirmelement (64, 64') vorgesehen ist, oder/und
- an dem ersten Gehäuseelement (22) im Bereich des Übergangsbereichs (60) wenigstens ein Abschirmelement (80) vorgesehen ist,
**dadurch gekennzeichnet,**
- **dass** an dem wenigstens einen Abschirmelement (64, 64', 66, 80) wenigstens eine auf die Außenwand zu gerichtete, mit der Außenwand fest verbundene erste Verbindungsausformung (68, 72, 82) vorgesehen ist oder/und an der Außenwand wenigstens eine auf das wenigstens eine Abschirmelement (64, 64', 66, 80) zu gerichtete, mit dem wenigstens einen Abschirmelement (64, 64', 66, 80) fest verbundene zweite Verbindungsausformung (76, 84) vorgesehen ist, und
- **dass** wenigstens ein Abschirmelement (64, 64', 66, 80) einen in Abstand zu der Außenwand positionierten Außenrandbereich (70, 74) umfasst.

2. Abgasanlage nach Anspruch 1, **dadurch gekennzeichnet, dass** das wenigstens eine Abschirmelement (64, 64', 66, 80) ein Blechumformteil ist, oder/und dass das wenigstens eine Abschirmelement (64, 64', 66, 80) eine Dicke im Bereich von 0,6 mm bis 1,0 mm, vorzugsweise etwa 0,8 mm, aufweist.

3. Abgasanlage nach Anspruch 1 oder 2, **dadurch gekennzeichnet, dass** die Außenwand wenigstens ein Blechumformteil umfasst, oder/und dass der Zwischenraum (65, 67) eine Abmessung im Bereich von 0,5 mm bis 6 mm aufweist.

4. Abgasanlage nach einem der Ansprüche 1-3, **dadurch gekennzeichnet, dass** jedes Abschirmelement (64, 64', 66, 80) einen in Abstand zu der Außenwand positionierten Außenrandbereich (70, 74) umfasst.

5. Abgasanlage nach einem der Ansprüche 1-4, **dadurch gekennzeichnet, dass** wenigstens zwei Abschirmelemente (64, 64') in einem Angrenzungsbereich (78) einander bereichsweise überlappend angeordnet sind.

6. Abgasanlage nach Anspruch 5, **dadurch gekennzeichnet, dass** zwischen den in dem Angrenzungsbereich (78) einander überlappend angeordneten Abschirmelementen (64, 64') ein Zwischenraum gebildet ist.

7. Abgasanlage nach einem der Ansprüche 1-6, **dadurch gekennzeichnet, dass** das wenigstens eine Abschirmelement (64, 64', 66, 80) bei wenigstens einer, vorzugsweise jeder Verbindungsausformung (68, 72, 82) durch Materialschluss, vorzugsweise Verschweißen, mit der Außenwand verbunden ist.

8. Abgasanlage nach Anspruch 5 oder 6 oder nach Anspruch 7, sofern auf Anspruch 5 oder 6 rückbezogen, **dadurch gekennzeichnet, dass** an dem zweiten Gehäuseelement (52) wenigstens zwei einander in dem dem Übergangsbereich (60) des ersten Gehäuseelements (32) gegenüberliegenden Bereich überlappende Abschirmelemente (64, 64') vorgesehen sind.

9. Abgasanlage nach einem der Ansprüche 1-8, **dadurch gekennzeichnet, dass** der stromaufwärtige Eintrittsbereich (14) der ersten Abgasbehandlungseinheit (16) mit einem Eintrittsgehäuse (12) verbunden ist.

10. Abgasanlage nach Anspruch 9, **dadurch gekennzeichnet, dass** das Eintrittsgehäuse (12) eine ein Abschirmelement (66) tragende Komponente bereitstellt.

11. Abgasanlage nach einem der Ansprüche1-10, **dadurch gekennzeichnet, dass** die erste Abgasbehandlungseinheit (12) einen Oxidationskatalysator (20) oder/und einen Partikelfilter (22) oder/und einen SCR-Katalysator umfasst, oder/und dass die zweite Abgasbehandlungseinheit (40) einen SCR-Katalysator (46) umfasst.

12. Abgasanlage nach Anspruch 11, **dadurch gekennzeichnet, dass** an dem Verbindungsgehäuse (30) eine Reaktionsmittelabgabeanordnung (62) zum Abgeben von Reaktionsmittel (R) in das Verbindungsgehäuse (30) durchströmendes Abgas (A) vorgesehen ist.

## Claims

1. Exhaust gas system for an internal combustion engine, comprising at least one component which limits an exhaust gas flow volume by way of an outer wall and, on an inner side of the outer wall which faces the exhaust gas flow volume, supports at least one shielding element (64, 64', 66, 80), wherein an intermediate space (65, 67) is formed between the outer wall and the shielding element (64, 64', 66, 80), further comprising at least one first exhaust gas treatment unit (16) with an upstream inlet region (14) and a downstream outlet region (28), and at least one second exhaust gas treatment unit (40) with an upstream inlet region (38) and a downstream outlet region (48), and a connecting housing (30) which is connected to the downstream outlet region (28) of the at least one first exhaust gas treatment unit (16) and the upstream inlet region (38) of the at least one second exhaust gas treatment unit (40), wherein the connecting housing (30) provides one component, carrying a shielding element (64, 64', 80), wherein the connecting housing (30) comprises a first housing element (32) with an inlet opening (34) and an outlet opening (36), wherein the downstream outlet region (28) of the at least one first exhaust gas treatment unit (16) is connected to the connecting housing (30) in the region of the inlet opening (34), and the upstream inlet region (38) of the at least one second exhaust gas treatment unit (40) is connected to the connecting housing (30) in the region of the outlet opening (36), wherein the connecting housing (30) comprises a second housing element (52) which, with the first housing element (32), encloses a connecting volume (54), through which exhaust gas can flow, and wherein the outer wall comprises the first housing element (32) or/and the second housing element (52), wherein:
- at least one shielding element (64) is provided on an inner side of the second housing element (52) facing the connecting volume (54), in a region which lies opposite the inlet opening (34), or/and
- at least one shielding element (64') is provided on an inner side of the second housing element (52), facing the connecting volume (54), in a region which lies opposite the outlet opening (36), or/and
- at least one shielding element (64, 64') is provided on the inner side of the second housing element (52) facing the connecting volume (54), in a region which lies opposite a transition region (60) formed between the inlet opening (34) and the outlet opening (36), or/and
- at least one shielding element (80) is provided at the first housing element (22) in the region of the transition region,
**characterized in that**
- at least one first connecting moulding (68, 72, 82) which is directed towards the outer wall and is connected fixedly to the outer wall is provided on the at least one shielding element (64, 64', 66, 80), or/and at least one second connecting moulding (76, 84) which is directed towards the at least one shielding element (64, 64', 66, 80) and is connected fixedly to the at least one shielding element (64, 64', 66, 80) is provided on the outer wall, and
- that at least one shielding element (64, 64', 66, 80) comprises an outer edge region (70, 74) which is positioned at a spacing from the outer wall.

2. Exhaust gas system according to claim 1, **characterized in that** the at least one shielding element (64, 64', 66, 80) is a sheet metal moulding, or/and **in that** the at least one shielding element (64, 64', 66, 80) has a thickness in the range from 0.6 mm to 1.0 mm, preferably approximately 0.8 mm.

3. Exhaust gas system according to claim 1 or 2, **characterized in that** the outer wall comprises at least one sheet metal moulding, or/and **in that** the intermediate space (65, 67) has a dimension in the range from 0.5 mm to 6 mm.

4. Exhaust gas system according to one of claims 1 to 3, **characterized in that** every shielding element (64, 64', 66, 80) comprises an outer edge region (70, 74) which is positioned at a spacing from the outer wall.

5. Exhaust gas system according to one of claims 1 to 4, **characterized in that** at least two shielding elements (64, 64') are arranged so as to overlap one another in regions in an adjoining region (78).

6. Exhaust gas system according to claim 5, **characterized in that** an intermediate space is formed between the shielding elements (64, 64') which are arranged so as to overlap one another in the adjoining region (78).

7. Exhaust gas system according to one of claims 1 to 6, **characterized in that**, in the case of at least one, preferably each connecting moulding (68, 72, 82), the at least one shielding element (64, 64', 66, 80) is connected to the outer wall by way of an integrally joined connection, preferably welding.

8. Exhaust gas system according to claim 5 or 6 or claim 7, if referred back to claim 5 or 6, **characterized in that** at least two shielding elements (64, 64') which overlap one another in the region which lies opposite the transition region (60) of the first housing element (32) are provided on the second housing element (52).

9. Exhaust gas system according to one of claims 1 to 8, **characterized in that** the upstream inlet region (14) of the first exhaust gas treatment unit (16) is connected to an inlet housing (12).

10. Exhaust gas system according to claim 9, **characterized in that** the inlet housing (12) provides a component carrying a shielding element (66).

11. Exhaust gas system according to one of claims 1 to 10, **characterized in that** the first exhaust gas treatment unit (12) comprises an oxidation catalytic converter (20) or/and a particulate filter (22) or/and an SCR catalytic converter, or/and **in that** the second exhaust gas treatment unit (40) comprises an SCR catalytic converter (46).

12. Exhaust gas system according to claim 11, **characterized in that** a reagent dispensing arrangement (62) for dispensing reagent (R) into exhaust gas (A) which flows through the connecting housing (30) is provided on the connecting housing (30).

## Revendications

1. Système de gaz d'échappement pour un moteur à combustion interne, comprenant au moins un composant qui limite un volume d'écoulement de gaz d'échappement au moyen d'une paroi extérieure et, sur un côté intérieur de la paroi extérieure qui fait face au volume d'écoulement de gaz d'échappement, supporte au moins un élément de blindage (64, 64', 66, 80), dans lequel un espace intermédiaire (65, 67) est formé entre la paroi extérieure et l'élément de blindage (64, 64', 66, 80), comprenant en outre au moins une première unité de traitement des gaz d'échappement (16) avec une zone d'entrée en amont (14) et une zone de sortie en aval (28), et au moins une deuxième unité de traitement des gaz d'échappement (40) avec une zone d'entrée en amont (38) et une zone de sortie en aval (48), et un boîtier de raccordement (30) relié à la zone de sortie en aval (28) dudit au moins une première unité de traitement des gaz d'échappement (16) et à la zone d'entrée amont (38) dudit au moins une deuxième unité de traitement des gaz d'échappement (40), dans lequel le boîtier de raccordement (30) constitute un composant portant un élément de blindage (64, 64', 80), dans lequel le boîtier de raccordement (30) comprend un premier élément de boîtier (32) avec une ouverture d'entrée (34) et une ouverture de sortie (36), dans lequel la zone de sortie en aval (28) dudit au moins une première unité de traitement des gaz d'échappement (16) est reliée au boîtier de raccordement (30) au niveau de l'ouverture d'entrée (34), et la zone d'entrée en amont (38) dudit au moins une deuxième unité de traitement des gaz d'échappement (40) est reliée au boîtier de raccordement (30) au niveau de l'ouverture de sortie (36), dans lequel le boîtier de raccordement (30) comprend un deuxième élément de boîtier (52) qui, avec le premier élément de boîtier (32), renferme un volume de raccordement (54) à travers lequel les gaz d'échappement peuvent s'écouler, et dans lequel la paroi extérieure comprend le premier élément de boîtier (32) ou/et le deuxième élément de boîtier (52), dans lequel :
- au moins un élément de blindage (64) est prévu sur une face intérieure du deuxième élément de boîtier (52) faisant face au volume de raccordement (54), dans une zone située à l'opposé de l'ouverture d'entrée (34), ou/et
- au moins un élément de blindage (64') est prévu sur une face intérieure du deuxième élément de boîtier (52), faisant face au volume de raccordement (54), dans une zone qui se trouve à l'opposé de l'ouverture de sortie (36), ou/et
- au moins un élément de blindage (64, 64') est prévu sur la face intérieure du deuxième élément de boîtier (52) faisant face au volume de raccordement (54), dans une zone qui se trouve à l'opposé d'une zone de transition (60) formée entre l'ouverture d'entrée (34) et l'ouverture de sortie (36), ou/et
- au moins un élément de blindage (80) est prévu sur le premier élément de boîtier (22) dans la région de la zone de transition,
**caractérisé en ce que**
- au moins une première moulure de raccordement (68, 72, 82) orientée vers la paroi extérieure et reliée de manière fixe à la paroi extérieure est prévue sur ledit au moins un élément de blindage (64, 64', 66, 80), ou/et au moins une deuxième moulure de raccordement (76, 84) orientée vers ledit au moins un élément de blindage (64, 64', 66, 80) et reliée de manière fixe audit au moins un élément de blindage (64, 64', 66, 80) est prévue sur la paroi extérieure, et
- qu'au moins un élément de blindage (64, 64', 66, 80) comprend une zone de bord extérieur (70, 74) qui est positionnée à une certaine distance de la paroi extérieure.

2. Système de gaz d'échappement selon la revendication 1, **caractérisé en ce que** ledit au moins un élément de blindage (64, 64', 66, 80) est une pièce moulée en tôle, ou/et **en ce que** ledit au moins un élément de blindage (64, 64', 66, 80) a une épaisseur comprise entre 0,6 mm et 1,0 mm, de préférence d'environ 0,8 mm.

3. Système de gaz d'échappement selon la revendication 1 ou 2, **caractérisé en ce que** la paroi extérieure comprend au moins une pièce moulée en tôle, ou/et **en ce que** l'espace intermédiaire (65, 67) a une dimension comprise entre 0,5 mm et 6 mm.

4. Système de gaz d'échappement selon l'une des revendications 1 à 3, **caractérisé en ce que** chaque élément de blindage (64, 64', 66, 80) comprend une zone de bord extérieur (70, 74) qui est positionnée à une certaine distance de la paroi extérieure.

5. Système de gaz d'échappement selon l'une des revendications 1 à 4, **caractérisé en ce qu'**au moins deux éléments de blindage (64, 64') sont disposés de manière à se chevaucher dans des régions d'une zone adjacente (78).

6. Système de gaz d'échappement selon la revendication 5, **caractérisé en ce qu'**un espace intermédiaire est formé entre les éléments de blindage (64, 64') qui sont disposés de manière à se chevaucher dans la zone adjacente (78).

7. Système de gaz d'échappement selon l'une des revendications 1 à 6, **caractérisé en ce que**, dans le cas d'au moins une, de préférence chaque moulure de raccordement (68, 72, 82), ledit au moins un élément de blindage (64, 64', 66, 80) est relié à la paroi extérieure au moyen d'une connexion intégrale, de préférence par soudage.

8. Système de gaz d'échappement selon la revendication 5 ou 6 ou la revendication 7, si elle est renvoyée à la revendication 5 ou 6, **caractérisé en ce qu'**au moins deux éléments de blindage (64, 64') qui se chevauchent l'un l'autre dans la région opposée à la région de transition (60) du premier élément de boîtier (32) sont prévus sur le deuxième élément de boîtier (52).

9. Système de gaz d'échappement selon l'une des revendications 1 à 8, **caractérisé en ce que** la zone d'entrée en amont (14), de la première unité de traitement des gaz d'échappement (16) est reliée à un boîtier d'entrée (12).

10. Système de gaz d'échappement selon la revendication 9, **caractérisé en ce que** le boîtier d'entrée (12) fournit un composant portant un élément de blindage (66).

11. Système de gaz d'échappement selon l'une des revendications 1 à 10, **caractérisé en ce que** la première unité de traitement des gaz d'échappement (12) comprend un convertisseur catalytique d'oxydation (20) ou/et un filtre à particules (22) ou/et un convertisseur catalytique SCR, ou/et **en ce que** la deuxième unité de traitement des gaz d'échappement (40) comprend un convertisseur catalytique SCR (46).

12. Système de gaz d'échappement selon la revendication 11, **caractérisé en ce qu'**un dispositif de distribution de réactif (62) pour distribuer le réactif (R) dans le gaz d'échappement (A) qui s'écoule à travers le boîtier de raccordement (30) est prévu sur le boîtier de raccordement (30).
